# EUROPÄISCHE PATENTSCHRIFT

(11) **EP 0 625 297 B1**
(45) Veröffentlichungstag und Bekanntmachung des Hinweises auf die Patenterteilung: **22.04.1998**
(21) Anmeldenummer: 93917374.6
(22) Anmeldetag: 28.01.1993
(51) Int. Cl.: H04N 7/00

(54) **VERFAHREN UND SCHALTUNG ZUR DECODIERUNG VON LETTERBOX-SIGNALEN**
PROCESS AND CIRCUIT FOR DECODING LETTER-BOX SIGNALS
PROCEDE ET CIRCUIT POUR DECODER DES SIGNAUX D'IMAGE DE FORMAT BOITE AUX LETTRES

(30) Priorität: 07.02.1992 DE 4203479
(43) Veröffentlichungstag der Anmeldung: 23.11.1994
(73) Patentinhaber: Deutsche Thomson-Brandt GmbH, 78003 Villingen-Schwenningen (DE)
(72) Erfinder: RIEMANN, Uwe, D-38124 Braunschweig (DE)
(74) Vertreter: Hartnack, Wolfgang, Dipl.-Ing.
(86) Internationale Anmeldenummer: EP9300189
(87) Internationale Veröffentlichungsnummer: WO9316554

(56) Entgegenhaltungen:
- WO-A-90/06657
- FERNSEH UND KINO TECHNIK Bd. 43, Nr. 10, 1989, BERLIN DE Seiten 522 - 526 , XP71530 W. HABERMANN '"Breit-PAL"- Anlass und Überlegungen zu einer Variante des PAL-Standards.'
- RUNDFUNKTECHNISCHE MITTEILUNGEN Bd. 34, Nr. 3, 1990, NORDERSTEDT DE Seiten 110 - 125 , XP137673 VON ANDREAS EBNER 'Die Entwicklung des I-PAL-M-Verfahrens und dessen Einbindung in das PAL-Plus-System.'

## Beschreibung

Die Erfindung betrifft ein Verfahren und eine Schaltung zur Decodierung von Letterbox-Signalen.

### Stand der Technik

Für die kompatible Übertragung des 16:9-Breitbildformates über terrestrische Kanäle wird derzeit der PALplus-Systemstandard spezifiziert. Bei diesem Verfahren wird in kompatibler Weise auf dem 4:3-Empfänger die 16:9-Bildinformation mit schwarzen Streifen am oberen und unteren Bildrand dargestellt. Zur Anpassung der Geometrieverhältnisse auf dem konventionellen 4:3-Empfänger bedarf es einer vertikalen Formatkonversion, bei der im sichtbaren Bildfenster auf dem 4:3-Empfänger nur eine geringere Zahl aktiver Zeilen dargestellt wird (Letterbox-Darstellung). Die restlichen Bereiche des 4:3-Empfängers erscheinen als schwarze Streifen zu je 72 Zeilen am oberen und unteren Bildrand. Zur formatfüllenden Darstellung auf dem zukünftigen 16:9-Empfänger werden jedoch alle Zeilen des Quellenbildes benötigt. Die hierzu notwendige Information wird als sog. Hilfssignal (Helper) in den schwarzen Streifen am oberen und unteren Bildrand übertragen. Für die Übertragung der Zusatzinformation wird im Amplitudenbereich der Ultraschwarzbereich ausgenutzt. Dadurch ist die eingelagerte Zusatzinformation auf dem 4:3-Empfänger nur geringfügig sichtbar.
Ein solches kompatibles Übertragungsverfahren ist aus WO-A-90 06657 bekannt.
Die vorgesehene kompatible Übertragung von 16:9-Bildern in der derzeitigen Fernsehnorm hat aber einige Nachteile. Zum einen ist die erste Zeile des Videobildes (Zeile 23) nur zur Hälfte mit Videoinformation gefüllt. Normalerweise verschwindet diese Zeile im Overscanbereich des Empfängers und ist daher nicht sichtbar. Bei der erforderlichen Formatkonversion für ein 16:9-Bild wird diese Zeile jedoch in die erste sichtbare Zeile des Letterboxbildes überführt und rückt damit in den sichtbaren Teil des Fernsehbildes. Das sichtbare kompatible PALplus-Bild würde demnach mit einer halben Zeile beginnen.
Zum anderen besteht zwischen den korrespondierenden Zeilen des ersten und des zweiten Teilbilds eine zeitliche Verzögerung von 313 Zeilen. Dies ist ungünstig für die angestrebte Farbkodierung im PALplus-Standard, wobei eine zeitliche Mittelung von Zeilen vorgesehen ist, die eine Verzögerungszeit von exakt 312 Zeilen aufweisen. Als Folge davon hätten jeweils die erste Zeile im ersten Teilbild sowie die letzte Zeile im zweiten Teilbild keine entsprechende Zeile als Partner.

### Erfindung

Der Erfindung liegt die Aufgabe zugrunde, ein verbessertes Verfahren zur Letterbox-Decoderierung anzugeben. Diese Aufgabe wird durch das in Anspruch 1 angegebene erfindungsgemäße Verfahren gelöst.

Im Prinzip besteht das erfindungsgemäße Verfahren darin, daß zur Decodierung von Letterbox-Signalen vor der sendeseitigen Letterbox-Formatkonversion von den Bildinhalt enthaltenden Zeilen jeweils die erste Zeile (23) des ersten Teilbilds und die letzte Zeile (623) des zweiten Teilbilds auf einen festgelegten Wert, insbesondere Schwarz, gesetzt wird und nach der Formatkonversion die Helperzeilen (23-58) des ersten Teilbilds um eine Zeile in Richtung höherer Zeilenzahlen und die Helperzeilen (588-623) des zweiten Teilbilds um eine Zeile in Richtung niedrigerer Zeilenzahlen verschoben werden, wobei für die empfängerseitige Rekonstruktion (45) der ursprünglichen Zeilen (23-623) jeweils statt der fehlenden ersten Letterboxzeile (59) des ersten Teilbilds die letzte übertragene bzw. aufgezeichnete Helperzeile (59) und statt der fehlenden letzten Letterboxzeile (587) des zweiten Teilbilds die erste übertragene bzw. aufgezeichnete Helperzeile (587) verwendet wird.

Der Erfindung liegt die weitere Aufgabe zugrunde, eine Einrichtung für das erfindungsgemäße Verfahren anzugeben. Diese Aufgabe wird durch die in Anspruch 2 angegebene erfindungsgemäße Einrichtung gelöst.

Im Prinzip ist die erfindungsgemäße Einrichtung versehen mit Speichermitteln für Helpersignale (42) und Speichermitteln (43) für Letterboxsignale, denen gesteuert durch eine Ein- und Auslesesteuerung (44) jeweils die entsprechenden Zeilen zugeführt werden und aus denen die entsprechenden Zeilen in eine nachgeschaltete Rekonstruktions-Matrix (45) zur Bildung der ursprünglichen senderseitigen Zeilenzahl ausgelesen werden, wobei jeweils das Ein- und Auslesen für die Helperzeilen und für die Letterboxzeilen kontinuierlich erfolgt, indem für die fehlende Letterboxzeile jeweils die zeitlich an dieser Stelle angeordnete Helperzeile eingelesen wird.

Für das Letterboxbild soll eine neue Zuordnung zwischen den Zeilen der beiden Teilbilder durchgeführt werden. Prinzipiell wird das erste Teilbild gegenüber dem zweiten Teilbild um eine Zeile versetzt. Zusätzlich muß die Anzahl der aktiven Letterboxzeilen pro Teilbild um eine Zeile verringert werden, so daß von den ursprünglich vorgesehenen 216 Zeilen pro Teilbild nur noch 215 aktive Zeilen für die Übertragung des Letterboxbildes verbleiben.

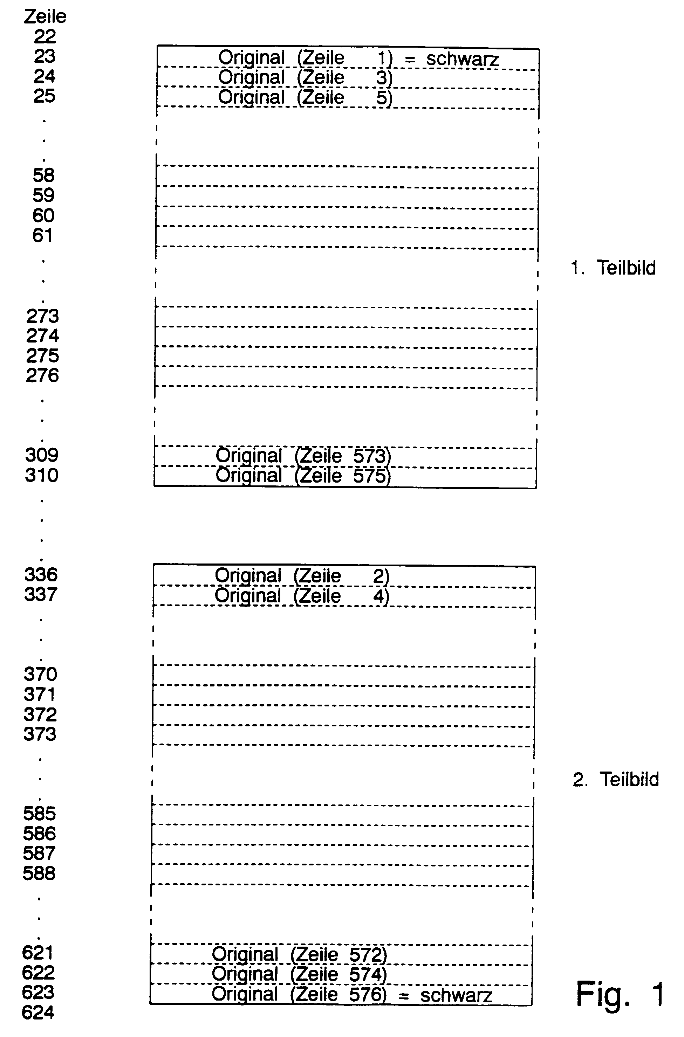

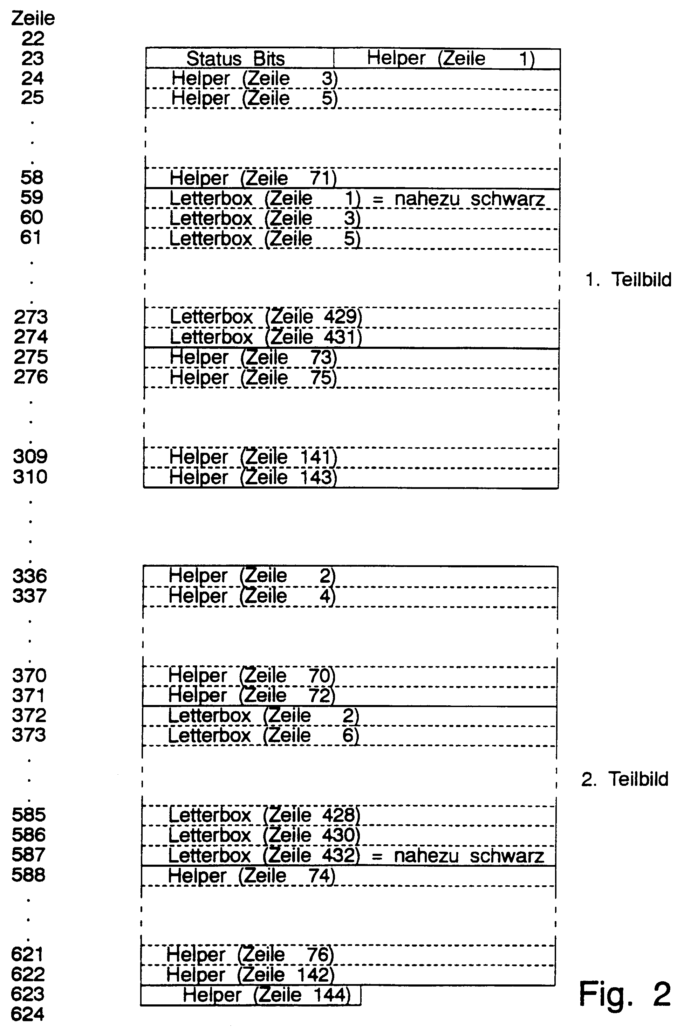

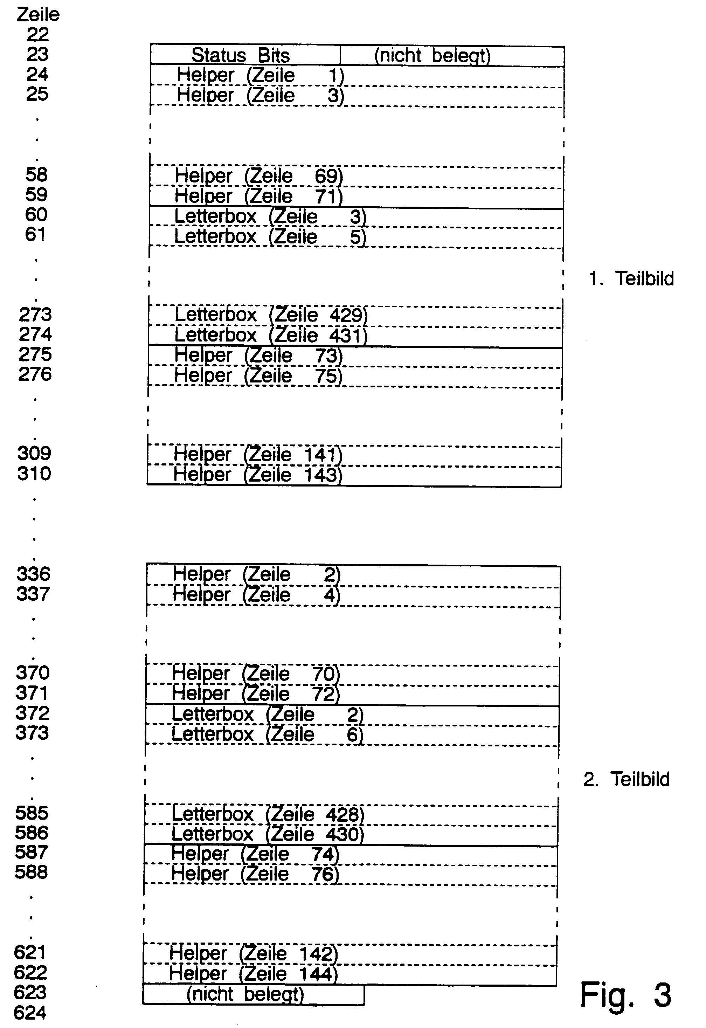

Zunächst wird studioseitig dafür gesorgt, daß das Quellenmaterial vor der Formatkonversion jeweils eine schwarze Zeile an erster Stelle im ersten Teilbild (Zeile Nr. 23) bzw. an letzter Stelle im zweiten Teilbild (Zeile Nr. 623) aufweist, wie in Fig. 1 dargestellt. Diese schwarzen Zeilen würden nach der Formatkonversion (aus jeweils vier Zeilen werden drei Letterbox-Zeilen interpoliert) durch die verwendete Interpolation wieder zu annähernd schwarzen Zeilen im Letterbox-Bild führen (Zeilen Nr. 59 und Nr. 587 in Fig. 2). Vereinbarungsgemäß sollen diese Zeilen nicht übertragen werden, weil ihr Informationsgehalt nur gering ist.
Die dadurch entstandene Lücke wird kompensiert, indem nach Fig. 3 die Übertragung der ersten 36 Helperzeilen für das erste Teilbild erst in Zeile Nr. 24 beginnt und die Übertagung der letzten 36 Helperzeilen für das zweite Teilbild schon ab Zeile Nr. 587 anfängt. Somit verbleiben insgesamt 430 aktive Zeilen für das Letterboxbild und 144 Zeilen für das Helpersignal. Zwischen den korrespondierenden aktiven Zeilen des ersten und des zweiten Teilbilds ergibt sich nunmehr die gewünschte Zeitdifferenz von 312 Zeilen.

Der PALplus-Dekoder rekonstruiert aus der in den schwarzen Streifen übertragenen Hilfsinformation mit insgesamt 144 Zeilen und dem Letterboxbild ein formatfüllendes 16:9-Bild mit 576 aktiven Zeilen. Die Anzahl der Letterbox- und Hilfszeilen muß daher in einem Verhältnis 1:3 stehen. Für insgesamt 144 Hilfszeilen werden somit exakt 432 Letterboxzeilen benötigt. Dies bedeutet, daß die vor der Übertragung herausgenommenen, nahezu schwarzen Zeilen des Letterboxbildes wieder hinzugefügt werden müssen. Da die Originalzeilen aber nicht mehr zur Verfügung stehen, müssen die zwei fehlenden Zeilen zusätzlich im Dekoder erzeugt werden.
Erfindungsgemäß werden als Ersatz für diese nicht übertragenen Zeileninformationen zwei der übertragenen Helperzeilen verwendet. Vorteilhaft kann die Videoinformation einer Helperzeile annähernd als "schwarz" betrachtet werden, weil das Hilfssignal wie bereits oben erwähnt im Ultraschwarz-Bereich übertragen wird.
Die Erfindung sieht weiterhin vor, als erste aktive Zeile des übertragenen Letterboxbildes vom ersten Teilbild die letzte Helperzeile (Zeile Nr. 59) zu verwenden. Entsprechendes gilt für die letzte aktive Letterboxzeile des zweiten Teilbilds, die mit der ersten Helperzeile (Zeile Nr. 587) des unteren "schwarzen" Letterbox-Streifens identisch ist.
Der Vorteil der Erfindung liegt in einer wesentlichen Vereinfachung für die schaltungstechnische Auslegung der Ein- und Auslesesteuerung der Speichermittel für die Helper-Information und die aktiven Zeilen des Letterbox-Formats.

### Zeichnungen

Anhand der Zeichnungen wird die Erfindung beschrieben. Die Zeichnungen zeigen in:
- Fig. 1: Anordnung der Zeilen eines 16:9-Bildes im Studio vor der Formatkonversion;
- Fig. 2: Anordnung der Zeilen eines 16:9-Bildes nach der Formatkonversion;
- Fig. 3: für die PALplus-Übertragung vorgesehene Anordnung von Letterbox- und Helperzeilen;
- Fig. 4: prinzipielles Blockschaltbild eines erfindungsgemäßen PALplus-Decoders.

### Ausführungsbeispiel

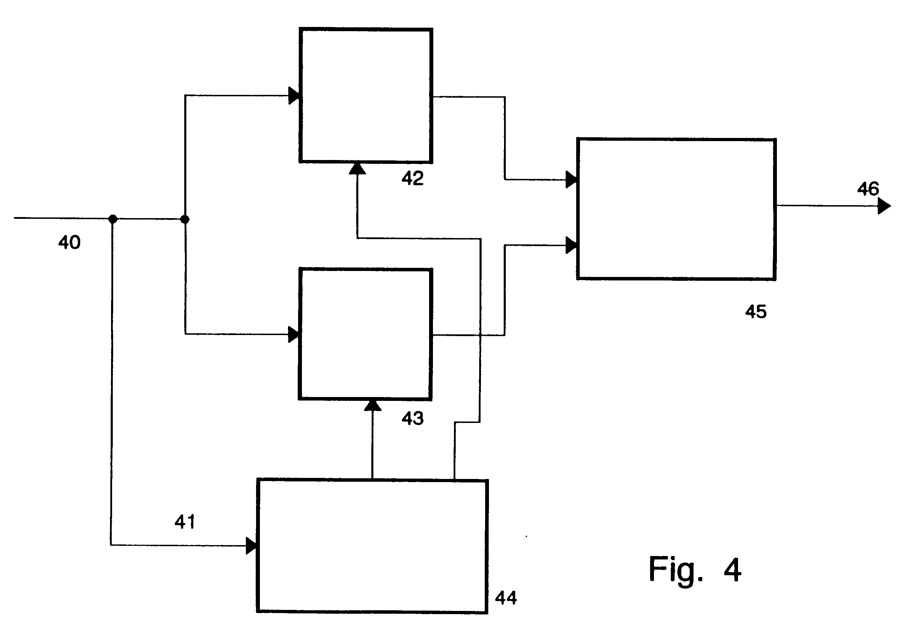

Der PALplus-Decoder in Fig. 4 erhält an seinem Eingang 40 z.B. ein FBAS-Signal, von dem die entsprechenden Helper-Zeilen in einem Helper-Speicher 42 und die Letterbox-Zeilen in einem Letter-box-Speicher 43 gespeichert werden. Von dem FBAS-Signal wird das Synchron-Signal verwendet und der Ein- und Auslesesteuerung 44 für die beiden Speicher zugeführt. In der Rekonstruktions-Matrix 45 werden aus den vorteilhaft fortlaufend ausgelesenen, gespeicherten Daten nach einer entsprechend angepaßten Verzögerungszeit aus jeweils drei Letterboxzeilen und einer Helperzeile jeweils vier Zeilen des 16:9-Bildes mit 576 aktiven Zeilen interpoliert, die dann am Ausgang 46 zur Verfügung stehen. Ob sich in den betreffenden Helperzeilen 71 und 74 überhaupt Hilfsinformation befindet, die den Bildinhalt der interpolierten Randzeile wesentlich ändert, hängt von den entsprechenden vertikalen Spektralanteilen im ursprünglichen Bild ab.

Ohne die Erfindung müßte die Kompensation der nicht übertragenen Letterboxzeilen durch eine Unterbrechung der Schreib- und Lesevorgänge des Helper-Speicher 42 und des Letterbox-Speichers 43 erfolgen. Dies würde aber zu einem erhöhten Schaltungsaufwand führen, weil zusätzliche Steuersignale erzeugt und den Speichern zugeführt werden müßten. Besonders nachteilig wäre, das dieser Prozeß nur für eine einzige Zeile innerhalb eines Teilbilds ausgeführt werden müßte und daß die Lage der Zeilen in den beiden Teilbildern unterschiedlich wäre. Es wären zusätzliche Logikbausteine zur Abfrage von Zählerzuständen in der Ein- und Auslesesteuerung 44 und zusätzliche Signalleitungen erforderlich. Demgegenüber kann erfindungsgemäß die Erzeugung der nicht übertragenen Letterboxzeilen und der damit verbundene zusätzliche Steuersignalaufwand entfallen, wenn die Start- und Endzeitpunkte des Letterboxbildes jeweils auf die entsprechenden Helperzeilen fixiert werden. Dadurch wird dem PALplus-Dekoder ein 432-Zeilen-Letterboxbild - bestehend aus zwei Teilbildern mit jeweils 216 Zeilen - vorgetäuscht, die mit einem kontinuierlichen Ein- und Ausleserhythmus gewonnen wurden.

Für andere Fernsehsysteme, z.B. NTSC, können die angegebenen Zahlenwerte entsprechend angepaßt werden.

## Patentansprüche

1. Verfahren zur Decodierung von Letterbox-Signalen, bei dem vor der sendeseitigen Letterbox-Formatkonversion von den Bildinhalt enthaltenden Zeilen jeweils die erste Zeile (23) des ersten Teilbilds und die letzte Zeile (623) des zweiten Teilbilds auf einen festgelegten Wert, insbesondere Schwarz, gesetzt wird und nach der Formatkonversion die Helperzeilen (23-58) des ersten Teilbilds um eine Zeile in Richtung höherer Zeilenzahlen und die Helperzeilen (588-623) des zweiten Teilbilds um eine Zeile in Richtung niedrigerer Zeilenzahlen verschoben werden, wobei für die empfängerseitige Rekonstruktion (45) der ursprünglichen Zeilen (23-623) jeweils statt der fehlenden ersten Letterboxzeile (59) des ersten Teilbilds die letzte übertragene bzw. aufgezeichnete Helperzeile (59) und statt der fehlenden letzten Letterboxzeile (587) des zweiten Teilbilds die erste übertragene bzw. aufgezeichnete Helperzeile (587) verwendet wird.

2. Schaltung für ein Verfahren nach Anspruch 1, versehen mit Speichermitteln für Helpersignale (42) und Speichermitteln (43) für Letterboxsignale, denen gesteuert durch eine Ein- und Auslesesteuerung (44) jeweils die entsprechenden Zeilen zugeführt werden und aus denen die entsprechenden Zeilen in eine nachgeschaltete Rekonstruktions-Matrix (45) zur Bildung der ursprünglichen senderseitigen Zeilenzahl ausgelesen werden, wobei jeweils das Ein- und Auslesen für die Helperzeilen und für die Letterboxzeilen kontinuierlich erfolgt, indem für die fehlende Letterboxzeile jeweils die zeitlich an dieser Stelle angeordnete Helperzeile eingelesen wird.

## Claims

1. Method for decoding letterbox signals, in the case of which method the first line (23) of the first field and the last line (623) of the second field are set to a fixed value, in particular black, before the letterbox format conversion at the transmission end of the lines containing the video content and, after the format conversion, the helper lines (23-58) of the first field are shifted by one line in the direction of higher line numbers, and the helper lines (588-623) of the second field are shifted by one line in the direction of lower line numbers, the last transmitted or recorded helper line being used for the reconstruction (45) at the receiver end of the original lines (23-623) in each case instead of the missing first letterbox line (59) of the first field, and the first transmitted or recorded helper line (587) being used instead of the missing last letterbox line (587) of the second field.

2. Circuit for a method according to Claim 1, provided with storage means for helper signals (42) and storage means (43) for letterbox signals, to which the corresponding lines are in each case supplied controlled by a reading-in and reading-out controller (44), and from which the corresponding lines are read out into a downstream recontruction matrix (45) in order to form the original line number at the transmitter end, the reading in and reading out in each case being carried out continually for the helper lines and for the letterbox lines, in that the helper line which is arranged at this point in time is in each case read in for the missing letterbox line.

## Revendications

1. Procédé de décodage de signaux Letterbox, dans lequel la première ligne (23) de la première demi-image et la dernière ligne (623) de la deuxième demi-image des lignes contenant l'image sont respectivement appliquées à une valeur définie, notamment le noir, avant la conversion au format Letterbox par l'émetteur, et dans lequel les lignes auxiliaires (23-58) de la première demi-image sont décalées d'une ligne vers le haut et les lignes auxiliaires (588-623) de la deuxième demi-image d'une ligne vers le bas, après conversion du format ; la dernière ligne auxiliaire (59) transmise ou enregistrée étant utilisée à la place de la première ligne au format Letterbox (59) manquante de la première demi-image et la première ligne auxiliaire (587) transmise ou enregistrée étant utilisée à la place de la dernière ligne au format Letterbox (587) manquante de la deuxième demi-image, pour la reconstruction côté récepteur (45) des lignes initiales (23-623).

2. Circuit pour un procédé selon la revendication 1, pourvu de moyens de stockage des signaux auxiliaires (42) et de moyens de stockage (43) des signaux au format Letterbox, auxquels sont respectivement amenées les lignes correspondantes, grâce à une commande de lecture et d'extraction (44) et desquels sont extraites les lignes correspondantes, dans une matrice de reconstruction montée en aval (45), en vue de la formation du nombre de lignes initial côté émetteur ; la lecture et l'extraction des lignes auxiliaires et des lignes au format Letterbox s'effectuant en continu, grâce à la lecture de la ligne auxiliaire correspondant dans le temps à la ligne manquante au format Letterbox, à la place de cette dernière.
